(19) Europäisches Patentamt

European Patent Office

Office européen des brevets

(11) **EP 1 953 925 B1**

(12) **EUROPEAN PATENT SPECIFICATION**

(45) Date of publication and mention of the grant of the patent:
**04.11.2009 Bulletin 2009/45**

(51) Int Cl.:
***H04B 7/08*** (2006.01)

(21) Application number: **07101765.1**

(22) Date of filing: **05.02.2007**

(54) **Multi-mode receiver with adaptive mode selection**

Multimodus-Empfänger mit adaptiver Modusauswahl

Récepteur multimodes avec sélection de mode adaptatif

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(43) Date of publication of application:
**06.08.2008 Bulletin 2008/32**

(73) Proprietor: **Research In Motion Limited Waterloo, Ontario N2L 3W8 (CA)**

(72) Inventors:
• **Wu, Huan Kanata Ontario K2M 2W8 (CA)**
• **Simmons, Sean Waterloo Ontario N2T 1E7 (CA)**

(74) Representative: **MERH-IP Matias Erny Reichl Hoffmann Paul-Heyse-Strasse 29 80336 München (DE)**

(56) References cited:
EP-A- 1 643 661      WO-A-01/59945
WO-A-2005/088864    WO-A-2006/125316
JP-A- 11 284 554

## Description

The application relates generally to receivers having multi-mode capability, specifically including single antenna and multiple antenna modes.

As part of the constant evolution of the GSM/EDGE Radio Access Network (GERAN), the legacy GSM/EDGE receiver has been enhanced by the Downlink Advanced Receiver Performance (DARP) technologies that are being standardized by the 3GPP.

The so-called legacy receiver is a one antenna receiver that applies to 8PSK (8 phase shift keying) modulation and GMSK (Gaussian Minimum shift keying) modulation.

One of the advanced technologies is referred to as Single Antenna Interference Cancellation (SAIC). This has been implemented in the so-called DARP-I receiver that is already in the 3GPP TS 45.005 standard. This approach only applies to GMSK (Gaussian minimum shift keying) modulation. The RF receive chain is substantially the same as in the legacy receiver featuring a single antenna. However, some advanced signal processing techniques are employed to make the receiver appear to have multiple antennas, referred to as virtual antennas since in fact there is only one physical antenna. This is achieved in part by over-sampling the received signal. More specifically, two samples per received symbol are taken instead of just one.

Another of these technologies is referred to as Mobile Station Reception Diversity (MSRD), and this is in the final phase of the standardization. This approach uses two receive antennas, and applies to both 8-PSK and GMSK modulations. Over-sampling is also performed with this approach.

WO 01/59945 A discloses a mobile communications device having two antennas, each selectively connectable to a separate respective receiver. In use the device is operated to selectively use one or both receivers in order to achieve a required quality of service. By using only one receiver when the use of both receivers is not necessary the power consumption of the device is reduced.

WO 2005/088864 A discloses a mobile communications device having plural antennas each connected to a separate respective receiver. In use the different receivers are connected to different base stations of a network to provide multi-antenna receive diversity, when this is needed to achieve the required quality of service. By using multi-antenna receive diversity selectively the power consumption of the device is reduced.

JP 11 284554 discloses a mobile communication device having two antennas, each connected to a separate respective receiver. In use, the device is connected to a base station by one receiver and the received signal intensity is monitored. If the received signal intensity drops below a predetermined threshold the second receiver attempts to establish a connection to another base station. By using two receivers in this way the frequency of call disconnection is reduced.

## Brief Description of the Drawings

Embodiments will now be described with reference to the attached drawings in which:

Figure 1 is a block diagram of an example receiver;
Figure 2 is a block diagram of a legacy receiver processing function;
Figure 3 is a block diagram of a DARP-I receiver processing function;
Figure 4 is a block diagram of a MSRD receiver processing function; and
Figure 5 is a block diagram of an example mobile device.

## General

An embodiment may provide a receiver comprising: two antennas; a plurality of receiver processing functions comprising at least one receiver processing function for processing a single signal and at least one receiver processing function for processing at least two signals; and a) a branch power detector operable to determine a power of each signal received by each antenna and compare the power of each signal with the power of each other signal to determine a measure of imbalance in the powers of the signals; and/or b) a correlation detector operable to determine a correlation between signals received on the two antennas; wherein the receiver is operable to select a receiver processing function by taking into account at least one of: the measure of imbalance in the powers of the signals when compared to a first threshold and the correlation when compared to a second threshold; and wherein the receiver is operable to select the receiver processing functions by de-selecting receiver processing functions for processing at least two signals when the imbalance is greater than an imbalance corresponding to the first threshold and/or by de-selecting receiver processing functions for processing at least two signals when the correlation is above the second threshold; wherein when the imbalance is greater than an imbalance corresponding to the first threshold, a strongest signal of the signals received on the two antennas is selected to produce a single signal for further processing by the at least one receiver processing function for processing a single signal; and wherein when the correlation is above the second threshold, a summation of the signals received on the two antennas is performed to produce a single signal for further processing by the at least one receiver processing function for processing a single signal.

Another embodiment may provide a method comprising: receiving a respective signal on each of a plurality of antennas; determining a power of each signal and comparing the power of each signal with the power of each other signal to determine a measure of imbalance in the powers of the signals; determining a correlation between the signals; selecting a receiver processing function of a plurality of receiver processing functions comprising at least one receiver processing function for processing a single signal and at least one receiver processing function for processing at least two signals, by taking into account at least one of: the measure of imbalance in the powers of the signals when compared to a first threshold and the correlation when compared to a second threshold; and producing an output using the selected receiver processing function; wherein selecting the receiver processing function comprises de-selecting receiver processing functions for processing at least two signals when the imbalance is greater than an imbalance corresponding to the first threshold and/or by de-selecting receiver processing functions for processing at least two signals when the correlation is above the second threshold; wherein when the imbalance is greater than an imbalance corresponding to the first threshold, selecting a strongest signal of the signals received on the two antennas to produce a single signal for further processing by the at least one receiver processing function for processing a single signal; and wherein when the correlation is above the second threshold, performing a summation of the signals received on the two antennas to produce a single signal for further processing by the at least one receiver processing function for processing a single signal.

The advanced technologies (DARP-I and MSRD) have their own limitations and do not always perform significantly better than the legacy receiver. In addition, DARP-I and MSRD receiver processing functions do not always perform equally well.

Specifically, the DARP-I receiver only works for GMSK modulation and it works well in interference dominant scenarios. In AWGN (additive white Gaussian noise) dominant situations, the DARP-I receiver actually causes losses compared to the legacy receiver.

The MSRD receiver relies on two reception antennas. It works well when the two antennas are gain balanced and de-correlated. When the two antennas are highly imbalanced (e.g. one of them is malfunctional) or are deeply correlated, its performance is worse than that of the legacy receiver or the DARP-I receiver.

A set of comprehensive techniques built into a receiver may be provided that selects a receiver processing function with the best potential performance for a certain scenario. These techniques can be applied burst by burst.

Front end power imbalance determination and correlation detectors

In some embodiments, at the front of the receiver before much has been done, signals received on two reception antennas may be processed to identify whether the MSRD receiver is appropriate or not. More specifically, one or both of the following may be performed:

A) The receive power of each antenna is determined as a measure of imbalance between the two antennas in order to identify the situation of highly imbalanced antennas.
B) A correlation coefficient between signals received on two antennas is computed to identify the situation of deeply correlated antennas.

The correlation coefficient and/or the imbalance may be processed to determine whether or not to disable the MSRD receiver. In a specific example, when the gain imbalance, measured for example by a ratio between powers received on the two antennas, is greater than a first threshold, the MSRD receiver may be disabled. In another example, when the correlation coefficient exceeds a second threshold, the MSRD receiver may be disabled.

More generally, there may be two or more antennas. The receive power and/or correlation coefficient can be used to select between one of a plurality of receiver processing functions and/or to select between one and all of the antennas and/or receiver processing functions, or to select particular subsets of antennas and/or receiver processing functions. It is of particular use to de-select any receiver processing function that processes multiple antenna signals, and that relies on gain balance and/low correlation to achieve good results.

Receiver processing function selection based on modulation format

In some embodiments, when the MSRD receiver is not selected, one of the DARP-I or the legacy receivers may be activated depending on the modulation format. In a specific example, a legacy receiver is selected for 8-PSK modulation, and a DARP-I receiver may be selected for GMSK modulation.

More generally, where the received signal may have one of multiple different modulation formats, the modulation format can be used to select or de-select on or more receiver processing functions.

Processing gain comparison

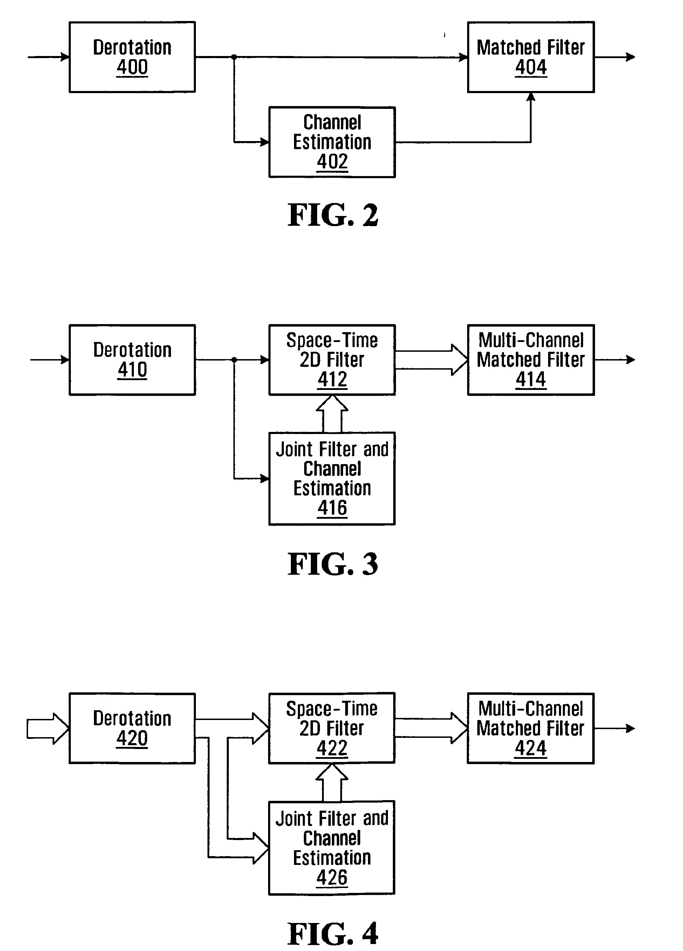

Both the DARP and the MSRD receivers may have an adaptive space-time 2-D filter before channel equalization. See for example Figures 3 and 4 described below. The input signal-to-noise ratio (SNR) and the output SNR ratio of the space-time 2-D filter may be determined as metrics (in dB) for the filter. The filtering gain is the difference between the output SNR and the input SNR. This difference is a measure of the performance improvement introduced by the DARP-I or MSRD receiver.

As a function of this filtering gain, the output of the DARP-I or MSRD receiver processing functions will be de-selected in favour of a legacy receiver processing function output or not. For example, if the gain is less than a threshold, the legacy receiver processing function output may be selected.

Assuming a DARP-I receiver processing function is enabled, the DARP receiver processing function will perform poorly in AWGN dominant conditions as opposed to interference dominant conditions. The AWGN conditions will result in poor filter gain and the subsequent selection of the legacy receiver processing function output. A low filtering gain will reflect poor performance generally. It is not necessary to know the cause of the poor performance, but of course, it may have been due to AWGN dominant conditions.

In addition, this approach can be used to provide side information for the selection/de-selection of the MSRD receiver processing function. More specifically, in some embodiments, the filtering gain is used in combination with the antenna gain imbalance and/or correlation coefficient to decide whether or not to de-select MSRD in favour of the legacy receiver processing function.

More generally, where multiple receiver processing functions are each processing one or more received signals in parallel, one or more of the processing functions can be selected or de-selected on the basis of filtering gain of one or more of the receiver processing functions.

Post-equalization comparison

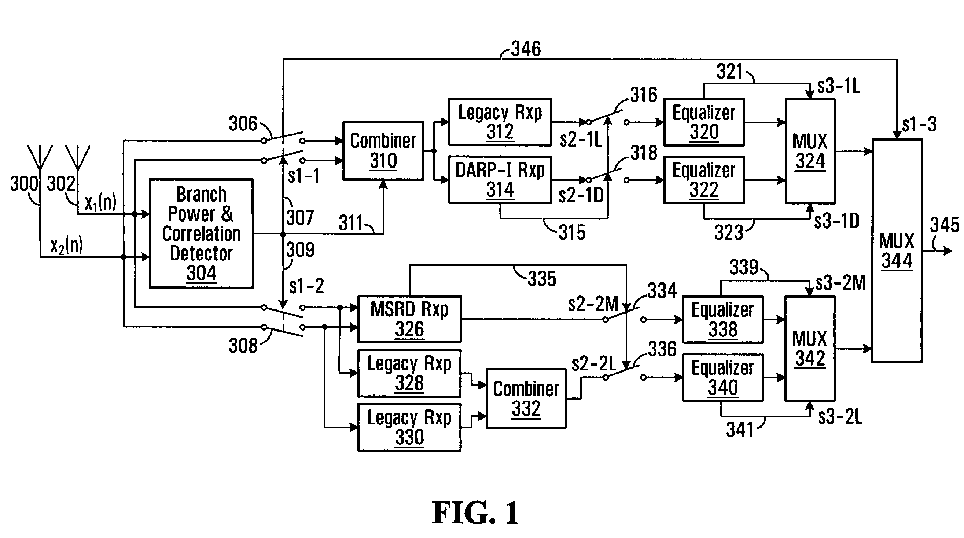

In some embodiments, two or more of the receiver processing functions, are executed on the received signals, and a separate channel equalization is applied to the output of each receiver processing function. In the specific example of Figure 1, equalization is applied to MSRD and Legacy receivers, or equalization is applied to DARP-I and legacy receivers, but DARP-I and MSRD are not implemented together. More generally, the particular combination of receivers for which equalization is performed is implementation specific. The best equalization output according to some metric is selected.

In some embodiments, more than one of the receiver processing functions may be executed, and a respective equalization output produced. The best receiver processing function may then be selected. In this case, the best result is always achieved, at least from the perspective of the metric used.

In some embodiments, the qualities of the soft decision outputs of the equalizers may be used as the metrics that are compared. The equalizer output having soft decisions with the highest quality may be selected as the output of the receiver. One of indicators of the quality of the soft decisions may be the Unreliable Soft decisions Count (USDC) which is described in commonly assigned co-pending U.S. application no. 11/564,953 filed on Nov. 30, 2006 (published as US 2008/0133983 on 05.06.2008). More generally, any method of determining the quality of the equalizer outputs can be employed. However, the USDC can be more computational attractive and consistent than other methods, e.g., the training sequence based BER estimation and SNR estimation. In some embodiments, this approach can be enabled or disabled as a function of whether or not the additional computational load of executing two or more receiver processing functions is acceptable.

In some embodiments, one or more of the receiver processing functions may be eliminated using one of the methods described previously. The equalizer outputs of the remaining receiver processing functions may be compared. In one specific example, the MSRD receiver may be eliminated after performing the gain imbalance analysis and or the correlation analysis. When this is the case, the qualities of the equalized signals produced by the legacy and DARP receiver processing functions may be compared, and the better quality result selected.

In another specific example, assuming MSRD has not been disabled, legacy processing is performed in parallel with the MSRD, and the best output is selected based on equalization quality.

In another specific example, one or more of the receiver processing functions may be eliminated using the processing gain analysis approach described above. In one specific example, the DARP receiver or the MSRD receiver output may be eliminated after performing the processing gain analysis. There is no need to examine the quality of an equalized signal produced by an eliminated receiver processing function.

It is noted that, in general, the transmitter does not need to be aware of what receiver processing function is being implemented in the receiver. However, that is not to say that receiver processing function selection has no effect upon network operation. Typically, receivers feedback information to the network to allow selection of transmit parameters such as transmit power, channel coding and modulation format among others. An example of such feedback information is downlink channel quality. The methods described herein can result in an improved effective downlink channel quality that, when fed back to the network, can allow the network to transmit with reduced power, and/or more efficient channel coding and modulation formats all of which may impact network capacity for the better.

**Description of Preferred Embodiments**

A specific circuit that incorporates the above embodiments will now be described with reference to Figure 1. Two antennas 300,302 are shown functionally interconnected to a branch power and correlation detector 304. The antennas 300,302 are also functionally interconnected with a combiner 310 through a switch 306. The switch 306 is controlled to be open or closed as a function of results produced by the branch power and correlation detector 304 as indicated by control path 307 carrying control signal s1-1. The combining performed by the combiner 310 is controlled as a function of results produced by the branch power and correlation detector 304 as indicated by control path 311.

An output of the combiner 310 is connected to both a legacy receiver processing function (Rxp) 312 and DARP-I Rxp 314. The output of the legacy Rxp 312 is connected through switch 316 to an equalizer 320. The output of DARP-I receiver 314 is connected through switch 318 to an equalizer 322. Switches 316 and 318 have their open and closed states controlled as a function of resulting processing gain of the DARP-I Rxp 314 as indicated by control path 315 carrying control signals s2-1L and s2-1D.

Equalizers 320,322 have respective outputs connected to a multiplexer (MUX) 324. Also shown is a control path 321 carrying control signal s3-1L between equalizer 320 and the multiplexer 324, and a control path 323 carrying control signal s3-1D between equalizer 322 and the multiplexer 324. The output of the multiplexer 324 is connected as an input to multiplexer 344. Multiplexer 324 operates to pass the output of a selected one of the equalizers 320,322 on to the multiplexer 344.

The antennas 300,302 are also functionally connected to MSRD Rxp 326, and to respective legacy Rxp 328,330 through switch 308. The switch 308 is controlled as a function of results produced by the branch power and correlation detector 304 as indicated by control path 309 carrying control signal s1-2. The MSRD Rxp 326 has an output connected through switch 334 to an equalizer 338. The two legacy Rxps 328,330 have respective outputs connected to inputs of a combiner 332. The combiner produces an output that is connected through switch 336 to another equalizer 340. Switches 334 and 336 have their open and closed states controlled as a function of the processing gain of the MSRD Rxp 326 as indicated by control path 335 carrying control signals s2-2M and s2-2L.

Equalizers 338,340 have respective outputs connected to a multiplexer (MUX) 342. Also shown is a control path 339 carrying control signal s3-2M between equalizer 338 and the multiplexer 342, and a control path 341 carrying control signal s3-2L between equalizer 340 and the multiplexer 342. The output of the multiplexer 342 is connected as an input to multiplexer 344. Multiplexer 342 operates to pass the output of a selected one of the equalizers 338,340 on to the multiplexer 344.

Multiplexer 344 operates to pass the output of one of the multiplexers 324,344 on to a main output 345. Control path 346 carrying control signal s1-3 from the branch power and correlation detector 304 is used to control which multiplexer output is passed on. In particular, if switch 306 is closed and switch 308 is open, then the output of multiplexer 324 is selected by multiplexer 344. If switch 306 is open and switch 308 is closed, then the output of multiplexer 342 is selected by multiplexer 344.

With reference to Figure 2, an example of a typical legacy Rxp consists derotation 400 followed by a matched filter 404 performed as a function of channel estimation 402. More generally, a legacy receiver processing function will include at least a matched filter and channel estimation, not necessarily connected exactly as shown.

An example of the DARP-I processing is shown in Figure 3. A specific implementation is described in commonly assigned co-pending U.S. application no. 11/420,254 filed on May 25. This involves derotation 410 followed by space-time 2D filtering 412 as a function of joint filter and channel estimation 416, followed by multi-channel matched filtering 414. More generally, an SAIC processing function, of which a DARP-I receiver processing function is a specific example, can be used.

It should be apparent that for the specific examples of Figures 2 and 3, the derotation function 400,410 could be implemented once in a system including both legacy and DARP-I receiver processing functions.

An example of the MSRD Rxp is shown in Figure 4. This involves de-rotation 420 followed by space-time 2D filtering 422 as a function of joint filter and channel estimation 426, followed by multi-channel matched filtering 424. The parallel lines in Figure 4 (output of 420) versus the non-parallel lines in Fig. 3 (output of 410) indicate multiple signal paths from multiple antennas as opposed to a single signal path from a single antenna. More generally, the components may not necessarily be connected exactly as shown.

In operation, digitized baseband signals from the two antennas 300,302 are $x_1(n)$ and $x_2(n)$ respectively. The power of and the correlation between the two branches are calculated in the branch power and correlation detector 304 as:

$$P_1 = \frac{1}{N}\sum_{n=0}^{N-1} |x_1(n)|^2, \quad P_2 = \frac{1}{N}\sum_{n=0}^{N-1} |x_2(n)|^2 \qquad (1)$$

$$R_{12} = \frac{\frac{1}{N}\sum_{n=0}^{N-1} x_1(n)x_2^{*}(n)}{\sqrt{P_1 P_2}} \qquad (2)$$

where $P_1$ and $P_2$ are the power estimations of the branches and $R_{12}$ is the correlation estimation between the branches. N is the number of samples available in a burst.

If $P_1/P_2 <$ Tp (assuming $P_1 \le P_2$, and $T_p$ is a predetermined threshold), the switch 306 is turned on (s1-1 = 1) and the switch 308 is turned off (s1-2 = 0). This is the case where the two antennas are deeply imbalanced and the MSRD processing is considered not necessary. The combiner 310 in this case picks the stronger signal for further processing.

If $R_{12} > T_r$, where $T_r$ is a predetermined threshold, the two antenna paths are highly correlated and the MSRD processing will not bring any gain. The positions of the switches are the same as those in the power comparison case above. In this case, the combiner 310 performs a simple summation of the two branches assuming the two branches are coherent and the initial phase difference is corrected. The signal-to-noise-ratio (SNR) will be improved by 3dB after the combining.

In the case of an 8PSK-modulated signal, only a legacy receiver processing will be carried out. The switch 316 is turned on (s2-1L = 1) and switch 318 is turned off (s2-1D = 0). The legacy Rxp's output is fed to the equalizer 320 which generates the soft decisions for the next block processing (FEC decoding, etc.) (not shown).

In the case of a GMSK-modulated signal, both the legacy Rxp 312 and the DARP-I Rxp 314 will be operational. If the processing gain of the DARP-I (the gain of the output SNR over the input SNR of the DARP-I Rxp) is below a predetermined threshold, the output of the DARP-I Rxp 314 is discarded by turning off the switch 318 (s2-1D = 0) and the legacy Rxp output will go through the equalizer and to the final output. Otherwise, both the switch 316 and switch 318 will be turned on (s2-1L = 1, s2-1D = 1) and the respective Rxp outputs will be equalized by equalizers 320,322. Only one of the outputs from the equalizers 320,322 will be selected by comparing the quality of the soft decisions generated by the equalizers. The one with the higher quality (for example the one with the lower USDC as described previously) is selected as the final output 345. The control signals s3-1L and s3-1D shown in the figure represent the quality of the outputs generated by the equalizers 320, 322 respectively.

Similar selection logic is provided for the MSRD receiver processing that occurs when switch 308 is closed and switch 306 is open. The two separate legacy Rxps 328,330 process respective signals from the two antennas 300,302. The outputs of the two legacy Rxps 328,330 are combined in combiner 332. When the SNR gain from the MSRD Rxp 326 is below a predetermined threshold, the switch 336 for legacy Rxp is on (s2-2L = 1) and the switch 334 for MSRD Rxp 326 is off (s2-2M = 0) and the output of the combiner 332 only is fed to equalizer 340. Otherwise both switches 334,336 are turned on and the output of the MSRD Rxp 326 is fed to equalizer 338, and the output of combiner 332 is fed to equalizer 340. The quality of the soft decisions produced by equalizers 338,340 is evaluated and the one with better quality is the final selection passed only the multiplexer 342. Again the USDC can be used in the evaluation in which case control signals s3-2M and s3-2L shown in Figure 1 represent the USDC values for the soft decisions of the two equalizers 338,340.

In the above description, there are many references to selecting a receiver Rxp. This can mean selecting one of several outputs that are all produced by respective receiver processing functions operating in parallel or in sequence. An example of this is performing selection based on the equalization metric - a respective metric is produced for at least two receiver processing functions both of which are executed, and a single output is selected. This can also mean selecting one or more of several receiver processing functions to produce one or more outputs, and that the remaining receiver processing functions are disabled/do not operate. An example of this is the disablement of the MSRD processing function on the basis of the correlation or gain imbalance. No output is ever produced for that receiver processing function for that selection period. In any event, the final selection of a particular receiver processing function means that the output of that receiver processing function is kept for further processing notwithstanding whether other receiver processing functions are operated in parallel, but not selected.

The overall process of selecting can involve multiple steps some of which may involve de-selecting particular receiver processing functions. A de-selected receiver processing function is eliminated from being a candidate to produce the final output. In some embodiments, there is a process of elimination whereby certain techniques are used to de-select one or more receiver processing functions, and then one or more other techniques are used to select from any remaining receiver processing functions. For example, the branch power and correlation detector can be used to perform a de-selection of the MSRD processing function, with other approaches being used to choose between legacy and DARP-I.

In another example of de-selection, the processing gain in the DARP-I or MSRD receiver processing function can be used to effectively de-select that path. In that case, for the particular example of Figure 1, there will only be one remaining path that gets selected by process of elimination.

Specific examples of receiver processing functions have been described above. More generally, the techniques described herein can be applied to any receiver processing functions. Each receiver processing function is operable to produce a signal for equalization. The specific examples of Figures 2,3,4 involve channel estimation (be it conventional or joint filter and channel estimation) and matched filtering (be it conventional or multi-channel), and examples of Figure 3 and 4 include space-time 2D filtering.

While the receiver processing functions are described as being for processing certain desired types of signals, it is to be understood that noise and/or interference components are also usually present. The interference components within desired PSK or GMSK signal may include other PSK components and/or GMSK components. These receiver processing functions described include:

the MSRD receiver processing function capable of processing two or more antenna signals that are comprise 8PSK and/or GMSK components; more generally, one or more receiver processing functions capable of processing two or more antenna signals that are composed of 8PSK or GMSK components may be provided; more generally still, one or more receiver processing functions capable of processing at least two signals are provided;
the legacy receiver processing function capable of processing one PSK signal or one GMSK signal; more generally one or more receiver processing functions capable of processing one PSK or one GMSK signal may be provided; more generally still, one or more receiver processing functions capable of processing a single signal are provided;
the single signal may be from a single antenna, or be produced by combining multiple antenna signals, for example by selection or adding;
the DARP-I receiver processing function capable of processing one GMSK signal; more generally, one or more receiver processing functions may be provided that are capable of processing one GMSK signal; the single signal may be from a single antenna, or be produced by combining multiple antenna signals, for example by selection or adding;
the combination of legacy receiver processing functions that each process a respective 8PSK or GMSK signal, and a combiner for combining legacy receiver processing function outputs and that collectively allow for processing of multiple 8PSK or GMSK signals.

The methods described have been shown in the context of specific methods of selecting between these specific receiver processing functions. More generally, it is to be understood that the particular receiver processing functions included is implementation specific. This may include zero, one or more, or all of the specific receiver processing functions referred to above. Furthermore, the techniques described may be applied to different permutations of the described receiver processing functions than those specifically disclosed.

In the illustrated examples, the receiver processing functions are implemented as hardware. However, more generally, the receiver processing functions may be implemented as hardware, firmware, software, or any appropriate combination thereof. Moreover, it is to be understood that the components described herein may be implemented as hardware, firmware, software, or any appropriate combination thereof.

In the illustrated examples the selection is performed step by step, with various outputs controlling various switches, and no centralized control. In another embodiment, a control function, implemented in hardware or software, is provided that takes some or all of the decision variables (antenna gains, correlations, processing gains, equalization qualities) and participates in the making of, or makes, the decision on the receiver processing function selection.

Mobile Device

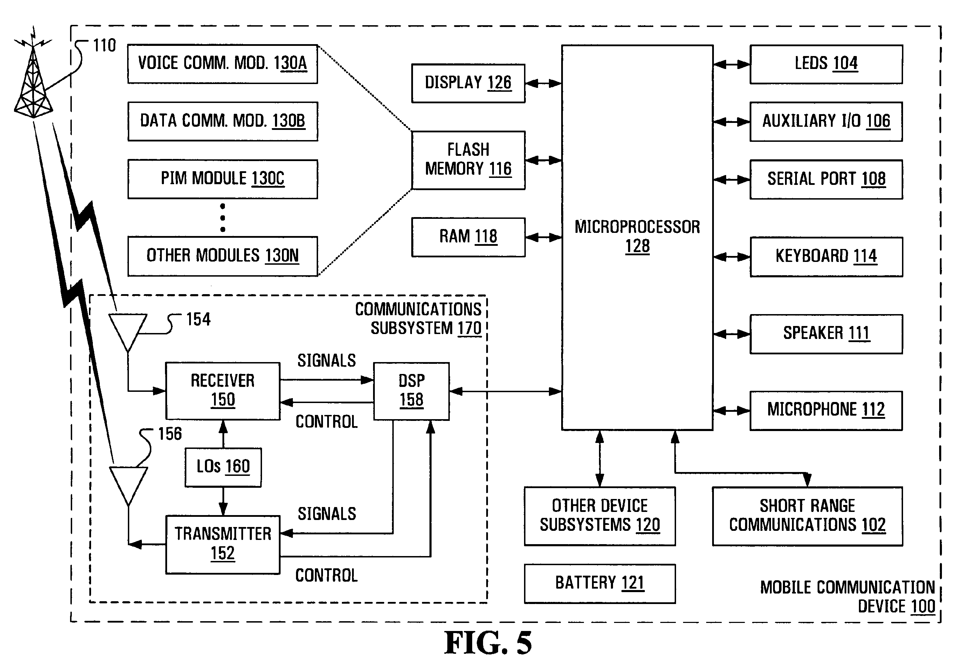

The receiver circuit disclosed herein may be implemented in a mobile device. Referring now to Figure 5, shown is a block diagram of an example mobile device 100. The mobile device 100 is not shown with components specific to the receiver circuit disclosed herein above; however, it is to be understood that the receiver circuit may be implemented in the mobile device 100. It is also to be understood that the mobile device 100 is shown with very specific details for example purposes only.

A processing device (a microprocessor 128) is shown schematically as coupled between a keyboard 114 and a display 126. The microprocessor 128 controls operation of the display 126, as well as overall operation of the mobile device 100, in response to actuation of keys on the keyboard 114 by a user.

The mobile device 100 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the mobile device 100 are shown schematically. These include: a communications subsystem 170; a short-range communications subsystem 102; the keyboard 114 and the display 126, along with other input/output devices including a set of LEDS 104, a set of auxiliary I/O devices 106, a serial port 108, a speaker 111 and a microphone 112; as well as memory devices including a flash memory 116 and a Random Access Memory (RAM) 118; and various other device subsystems 120. The mobile device 100 may have a battery 121 to power the active elements of the mobile device 100. The mobile device 100 is in some embodiments a two-way radio frequency (RF) communication device having voice and data communication capabilities. In addition, the mobile device 100 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device 100 may also be stored to the RAM 118.

The microprocessor 128, in addition to its operating system functions, enables execution of software applications on the mobile device 100. A predetermined set of software applications that control basic device operations, such as a voice communications module 130A and a data communications module 130B, may be installed on the mobile device 100 during manufacture. In addition, a personal information manager (PIM) application module 130C may also be installed on the mobile device 100 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture. One or more of the modules 130A, 130B, 130C, 130N of the flash memory 116 can be configured for implementing features of the receiver processing functions described herein above.

Communication functions, including data and voice communications, are performed through the communication subsystem 170, and possibly through the short-range communications subsystem 120. The communication subsystem 170 includes a receiver 150, a transmitter 152 and one or more antennas, illustrated as a receive antenna 154 and a transmit antenna 156. In addition, the communication subsystem 170 also includes a processing module, such as a digital signal processor (DSP) 158, and local oscillators (LOs) 160. The communication subsystem 170 having the transmitter 152 and the receiver 150 can be implemented to include components for the receiver circuit described herein above. The specific design and implementation of the communication subsystem 170 is dependent upon the communication network in which the mobile device 100 is intended to operate. For example, the communication subsystem 170 of the mobile device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 100.

Network access may vary depending upon the type of communication system. For example, in the Mobitex™ and DataTAC™ networks, mobile devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile device 100 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the mobile device 100. In addition, the display 126 may also be utilized in voice communication mode, for example, to display the identity of a calling party, the duration of a voice call, or other voice call related information.

The short-range communications subsystem 102 enables communication between the mobile device 100 and other proximate systems or devices, which need not necessarily be similar devices. For example, the short-range communications subsystem may include an infrared device and associated circuits and components, or a Bluetooth™ communication module to provide for communication with similarly-enabled systems and devices.

Numerous modifications and variations are possible in light of the above teachings. It is therefore to be understood that within the scope of the appended claims, embodiments may be practised otherwise than as specifically described herein.

**Claims**

1.  A receiver comprising:

    two antennas (300,302);
    a plurality of receiver processing functions (312,314,326,330) comprising at least one receiver processing function for processing a single signal and at least one receiver processing function for processing at least two signals; and

        a) a branch power detector (304) operable to determine a power of each signal received by each antenna and compare the power of each signal with the power of each other signal to determine a measure of imbalance in the powers of the signals; and/or
        b) a correlation detector (304) operable to determine a correlation between signals received on the two antennas;

    wherein the receiver is operable to select a receiver processing function by taking into account at least one of:

        the measure of imbalance in the powers of the signals when compared to a first threshold and the correlation when compared to a second threshold; and

    wherein the receiver is operable to select the receiver processing functions by de-selecting receiver processing functions for processing at least two signals when the imbalance is greater than an imbalance corresponding to the first threshold and/or by de-selecting receiver processing functions for processing at least two signals when the correlation is above the second threshold;
    wherein when the imbalance is greater than an imbalance corresponding to the first threshold, a strongest signal of the signals received on the two antennas is selected to produce a single signal for further processing by the at least one receiver processing function for processing a single signal; and
    wherein when the correlation is above the second threshold, a summation of the signals received on the two antennas is performed to produce a single signal for further processing by the at least one receiver processing function for processing a single signal.

2.  The receiver of claim 1 wherein the receiver is further operable to select the receiver processing function by de-selecting at least one receiver processing function as a function of modulation type.

3.  The receiver of any one of claim 1 or claim 2 wherein:

    the receiver is further operable to select the receiver processing function by selecting between first and second receiver processing functions of said plurality of receiver processing functions as a function of modulation type by:

> selecting the first receiver processing function (312) when the modulation type is 8 phase shift keying '8-PSK'; and
> selecting the second receiver processing function (314) when the modulation type is Gaussian Minimum shift keying 'GMSK'.

4. The receiver of any one of claims 1 to 3 wherein:

> the receiver is further operable to select the receiver processing function by de-selecting a receiver processing function of said plurality of receiver processing functions as a function of processing gain for the receiver processing function.

5. The receiver of claim 4 wherein:

> the receiver is further operable to select the receiver processing function by de-selecting a receiver processing function of said plurality of receiver processing functions as a function of processing gain for the receiver processing function by:

>> determining a processing gain for one of a first and second receiver processing functions of said plurality of processing functions; and
>> de-selecting the one of the first and second receiver processing functions if the determined processing gain is below a threshold.

6. The receiver of any one of claims 1 to 5 further operable to select the receiver processing function by:

> performing receiver processing using at least two of the receiver processing functions;
> performing a respective equalization on an output of each of the at least two receiver processing functions to produce a respective equalized output; and
> determining a quality metric for each equalized output;
> selecting the receiver processing function according to the quality metrics.

7. The receiver of claim 6 wherein the quality metric comprises Unreliable Soft decisions Count 'USDC'.

8. The receiver of any one of claims 1 to 7 wherein the plurality of receiver processing functions comprise:

> a receiver processing function (312) for processing one 8PSK signal or one GMSK signal;
> a receiver processing function (314) for processing one GMSK signal using single antenna interference cancellation; and
> at least one receiver processing function (326) for processing two GMSK signals or two 8PSK signals.

9. The receiver of claim 8 wherein:

> the receiver processing function for processing one 8PSK signal or one GMSK signal comprises a legacy receiver processing function;
> the receiver processing function for processing one GMSK signal using single antenna interference cancellation comprises a DARP-I receiver processing function; and
> the at least one receiver processing function for processing two GMSK signals or two 8PSK signals comprises an MSRD receiver processing function.

10. The receiver of claim 9 wherein the at least one receiver processing function for processing two GMSK signals or two 8PSK signals further comprises two or more legacy receiver processing functions (328,330) for processing the two GMSK signals or two 8PSK signals and a combiner (332) for combining outputs of the two legacy receiver processing functions.

11. The receiver of claim 1 wherein:

> the plurality of receiver processing functions comprise means for: derotation (400,410,420); channel estimation (402,416,426); and matched filtering (404,414,424), the receiver further comprising:

a first switch (306) for providing signals from the two antennas (300,302) to a first subset of the plurality of the receiver processing functions (312,314) and a second switch (308) for providing signals from the two antennas (300,302) to a second subset of the plurality of the receiver processing functions (326,328,330), the first and second switches responsive to at least one of the branch power detector (304) and correlator detector (304);
a signal path from each of the two antennas to the first and second switches (306,308) and to at least one of the branch power detector (304) and correlator detector (304);
a first signal combiner (310) coupled to the output of the first switch (306) and responsive to at least one of the branch power detector (304) and correlator detector (304);

wherein the receiver is operable to select a receiver processing function by using at least one of the first and second switches (306,308) to provide a signal received from each of the two antennas to at least one of the plurality of the receiver processing functions (312,314,326,330) in response to at least one of the branch power detector (304) and correlator detector (304); and
wherein the first subset of the plurality of the receiver processing functions (312,314) comprises a legacy receiver processing function (312) and a Downlink Advanced Receiver Performance "DARP-1" receiver processing function and the second subset of the plurality of the receiver processing functions (326,328,330) comprises a Mobile Station Reception Diversity "MSRD" receiver processing function (326) and at least two legacy receiver processing functions (328,330), each having an output, the at least two outputs being combined by a second signal combiner (332); a first plurality of switches (316,318), each switch coupled to an output of one of the first subset of the plurality of the receiver processing functions (312,314) and a second plurality of switches (334,336), each switch coupled to an output of one of the MSRD receiver processing function (326) and the second signal combiner (332);
each switch of the first plurality of switches being responsive to an output of the DARP-1 receiver processing function;
each switch of the second plurality of switches being responsive to an output of the MSRD receiver processing function;
a first plurality of equalizers, a respective equalizer (320,322) coupled to each switch (316,318) of the first plurality of switches;
a second plurality of equalizers, a respective equalizer (338,340) coupled to each switch (334,336) of the second plurality of switches;
a first multiplexer (324) coupled to the first plurality of equalizers (320,322) and responsive to at least one output of the first plurality of equalizers (320,322);
a second multiplexer (342) coupled to the second plurality of equalizers (338,340) and responsive to at least one output of the second plurality of equalizers;
a third multiplexer (344) coupled to each of the first and second multiplexers (324,342) and responsive to an output of at least one of the branch power detector (304) and correlator detector (304);
wherein the receiver is operable to select a receiver processing function by using at least one switch of the first plurality of switches and the second plurality of switches (316,318) to control selection of outputs of at least one of the plurality of the receiver processing functions (312,314,326,328,330) in response to at least one of an output of the DARP-1 receiver processing function and an output of the MSRD receiver processing function.

12. A mobile device comprising the receiver of any one of claims 1 to 11.

13. A method comprising:

receiving a respective signal on each of a plurality of antennas;
determining a power of each signal and comparing the power of each signal with the power of each other signal to determine a measure of imbalance in the powers of the signals;
determining a correlation between the signals;
selecting a receiver processing function of a plurality of receiver processing functions comprising at least one receiver processing function for processing a single signal and at least one receiver processing function for processing at least two signals, by taking into account at least one of:

the measure of imbalance in the powers of the signals when compared to a first threshold and the correlation when compared to a second threshold; and
producing an output using the selected receiver processing function;

wherein selecting the receiver processing function comprises de-selecting receiver processing functions for processing at least two signals when the imbalance is greater than an imbalance corresponding to the first threshold and/or by de-selecting receiver processing functions for processing at least two signals when the correlation is above the second threshold;

wherein when the imbalance is greater than an imbalance corresponding to the first threshold, selecting a strongest signal of the signals received on the two antennas to produce a single signal for further processing by the at least one receiver processing function for processing a single signal; and

wherein when the correlation is above the second threshold, performing a summation of the signals received on the two antennas to produce a single signal for further processing by the at least one receiver processing function for processing a single signal.

14. The method of claim 13 wherein receiving a respective signal on each of a plurality of antennas; comprise:

    receiving a respective signal on each of two antennas.

15. The method of claim 13 or claim 14 wherein selecting the receiver processing function further comprises:

    selecting the receiver processing function by de-selecting at least one receiver processing function as a function of modulation type.

16. The method of any one of claims 13 to 15 wherein selecting the receiver processing function further comprises:

    executing one of the plurality of receiver processing functions and determining a processing gain achieved by the receiver processing function;
    selecting the receiver processing function by de-selecting a receiver processing function of said plurality of receiver processing functions as a function of processing gain for that receiver processing function.

17. The method of any one of claims 13 to 15 wherein selecting the receiver processing function further comprises:

    performing receiver processing using at least two of the receiver processing functions;
    performing a respective equalization on an output of each of the at least two receiver processing functions to produce a respective equalized output; and
    determining a quality metric for each equalized output;
    selecting the receiver processing function according to the quality metrics.

18. The method of claim 17 wherein determining a quality metric comprises determining an Unreliable Soft decisions Count 'USDC'.

19. The method of any of claims 13 to 18, wherein
selecting the receiver processing function from the plurality of receiver processing functions as a function of correlation and/or gain imbalance between antennas and any one or a combination of:

    a) the processing gain resulting from one or more of the receiver processing functions;
    b) the equalization quality of equalized outputs of at least two receiver processing functions.

20. A computer readable medium storing program code executable by a processor of a computing device for causing said computing device to perform the method of any one of claims 13 to 19.

**Patentansprüche**

1. Empfänger, der aufweist:

    zwei Antennen (300, 302);
    eine Vielzahl von Empfängerverarbeitungsfunktionen (312, 314, 326, 330), die zumindest eine Empfängerverarbeitungsfunktion zum Verarbeiten eines einzelnen Signals und zumindest eine Empfängerverarbeitungsfunktion zum Verarbeiten von zumindest zwei Signalen aufweisen; und

a) einen Zweig-Leistungs-Detektor (304), der betriebsfähig ist, eine Leistung jedes Signals zu bestimmen, das durch jede Antenne empfangen wird, und die Leistung jedes Signals mit der Leistung jedes anderen Signals zu vergleichen, um ein Ungleichgewichtsmaß in den Leistungen der Signale zu bestimmen; und/oder
b) einen Korrelations-Detektor (304), der betriebsfähig ist, eine Korrelation zwischen Signalen zu bestimmen, die auf den zwei Antennen empfangen werden;

wobei der Empfänger betriebsfähig ist, eine Empfängerverarbeitungsfunktion auszuwählen durch Berücksichtigen zumindest eines aus:

dem Ungleichgewichtsmaß in den Leistungen der Signale, wenn mit einer ersten Schwelle verglichen, und der Korrelation, wenn mit einer zweiten Schwelle verglichen; und

wobei der Empfänger betriebsfähig ist, die Empfängerverarbeitungsfunktionen auszuwählen durch Abwählen von Empfängerverarbeitungsfunktionen zur Verarbeitung von zumindest zwei Signalen, wenn das Ungleichgewicht größer ist als ein Ungleichgewicht, das der ersten Schwelle entspricht, und/oder durch Abwählen von Empfängerverarbeitungsfunktionen zur Verarbeitung von zumindest zwei Signalen, wenn die Korrelation über der zweiten Schwelle liegt;
wobei, wenn das Ungleichgewicht größer ist als ein Ungleichgewicht, das der ersten Schwelle entspricht, ein stärkstes Signal der Signale, die auf den zwei Antennen empfangen werden, ausgewählt wird, um ein einzelnes Signal zu erzeugen zur weiteren Verarbeitung durch die zumindest eine Empfängerverarbeitungsfunktion zur Verarbeitung eines einzelnen Signals; und
wobei, wenn die Korrelation über der zweiten Schwelle liegt, eine Summierung der Signale durchgeführt wird, die auf den zwei Antennen empfangen werden, um ein einzelnes Signal zu erzeugen zur weiteren Verarbeitung durch die zumindest eine Empfängerverarbeitungsfunktion zur Verarbeitung eines einzelnen Signals.

2. Empfänger gemäß Anspruch 1, wobei der Empfänger weiter betriebsfähig ist, die Empfängerverarbeitungsfunktion auszuwählen durch Abwählen zumindest einer Empfängerverarbeitungsfunktion als eine Funktion eines Modulationstyps.

3. Empfänger gemäß Anspruch 1 oder Anspruch 2, wobei:

der Empfänger weiter betriebsfähig ist, die Empfängerverarbeitungsfunktion auszuwählen durch Auswählen zwischen ersten und zweiten Empfängerverarbeitungsfunktionen der Vielzahl von Empfängerverarbeitungsfunktionen als eine Funktion des Modulationstyps durch:

Auswählen der ersten Empfängerverarbeitungsfunktion (312), wenn der Modulationstyp 8-Phasenmodulation "8-PSK(phase shift keying)" ist; und
Auswählen der zweiten Empfängerverarbeitungsfunktion (314), wenn der Modulationstyp GMSK (Gaussian Minimum shift keying) ist.

4. Empfänger gemäß einem der Ansprüche 1 bis 3, wobei:

der Empfänger weiter betriebsfähig ist, die Empfängerverarbeitungsfunktion auszuwählen durch Abwählen der Empfängerverarbeitungsfunktion der Vielzahl von Empfängerverarbeitungsfunktionen als eine Funktion eines Verarbeitungsgewinns für die Empfängerverarbeitungsfunktion.

5. Empfänger gemäß Anspruch 4, wobei:

der Empfänger weiter betriebsfähig ist, die Empfängerverarbeitungsfunktion auszuwählen durch Abwählen einer Empfängerverarbeitungsfunktion
der Vielzahl von Empfängerverarbeitungsfunktionen als eine Funktion eines Verarbeitungsgewinns für die Empfängerverarbeitungsfunktion durch:

Bestimmen eines Verarbeitungsgewinns für eine von ersten und zweiten Empfängerverarbeitungsfunktionen der Vielzahl von Empfängerverarbeitungsfunktionen; und
Abwählen der einen der ersten und zweiten Empfängerverarbeitungsfunktionen, wenn der bestimmte Verarbeitungsgewinn unter einer Schwelle liegt.

**6.** Empfänger gemäß einem der Ansprüche 1 bis 5, der weiter betriebsfähig ist, die Empfängerverarbeitungsfunktion auszuwählen durch:

Durchführen einer Empfängerverarbeitung unter Verwendung von zumindest zwei der Empfängerverarbeitungsfunktionen;
Durchführen einer jeweiligen Entzerrung für eine Ausgabe von jeder der zumindest zwei Empfängerverarbeitungsfunktionen, um eine jeweilige entzerrte Ausgabe zu erzeugen; und
Bestimmen einer Qualitätsmetrik für jede entzerrte Ausgabe;
Auswählen der Empfängerverarbeitungsfunktion gemäß den Qualitätsmetriken.

**7.** Empfänger gemäß Anspruch 6, wobei die Qualitätsmetrik USDC (Unreliable Soft decision Count) aufweist.

**8.** Empfänger gemäß einem der Ansprüche 1 bis 7, wobei die Vielzahl von Empfängerverarbeitungsfunktionen aufweist:

eine Empfängerverarbeitungsfunktion (312) zur Verarbeitung eines 8PSK-Signals oder eines GMSK-Signals;
eine Empfängerverarbeitungsfunktion (314) zur Verarbeitung eines GMSK-Signals unter Verwendung einer Einzel-Antennen-Interferenz-Unterdrückung; und
zumindest eine Empfängerverarbeitungsfunktion (326) zur Verarbeitung von zwei GMSK-Signalen oder zwei 8PSK-Signalen.

**9.** Empfänger gemäß Anspruch 8, wobei:

die Empfängerverarbeitungsfunktion zur Verarbeitung eines 8PSK-Signals oder eines GMSK-Signals eine Standard(legacy)-Empfängerverarbeitungsfunktion aufweist;
die Empfängerverarbeitungsfunktion zur Verarbeitung eines GMSK-Signals unter Verwendung von Einzel-Antennen-Interferenz-Unterdrückung eine DARP-1-Empfängerverarbeitungsfunktion aufweist; und
die zumindest eine Empfängerverarbeitungsfunktion zur Verarbeitung von zwei GMSK-Signalen oder zwei 8PSK-Signalen eine MSRD-Empfängerverarbeitungsfunktion aufweist.

**10.** Empfänger gemäß Anspruch 9, wobei die zumindest eine Empfängerverarbeitungsfunktion zur Verarbeitung von zwei GMSK-Signalen oder zwei 8PSK-Signalen weiter aufweist zwei oder mehr Standard-Empfängerverarbeitungsfunktionen (328, 330) zur Verarbeitung der zwei GMSK-Signale oder zwei 8PSK-Signale und einen Kombinierer (332) zum Kombinieren von Ausgaben der zwei Standard-Empfängerverarbeitungsfunktionen.

**11.** Empfänger gemäß Anspruch 1, wobei:

die Vielzahl von Empfängerverarbeitungsfunktionen Mittel aufweisen für:

Derotation (400, 410, 420); Kanalschätzung (402, 416, 426); und
Optimalfiltern (404, 414, 424), wobei der Empfänger weiter aufweist:

einen ersten Schalter (306) zum Vorsehen von Signalen von den zwei Antennen (300, 302) an einen ersten Teilsatz der Vielzahl der Empfängerverarbeitungsfunktionen (312, 314) und einen zweiten Schalter (308) zum Vorsehen von Signalen von den zwei Antennen (300, 302) an einen zweiten Teilsatz der Vielzahl der Empfängerverarbeitungsfunktionen (326, 328, 330), wobei die ersten und zweiten Schalter reagieren auf zumindest einen des Zweig-Leistungs-Detektors (304) und des Korrelator-Detektors (304); einen Signalpfad von jeder der zwei Antennen an die ersten und zweiten Schalter (306, 308) und an zumindest einen des Zweig-Leistungs-Detektors (304) und des Korrelator-Detektors (304); einen ersten Signal-Kombinierer (310), der mit dem Ausgang des ersten Schalters (306) verbunden ist und anspricht auf zumindest einen des Zweig-Leistungs-Detektors (304) und des Korrelator-Detektors (304);

wobei der Empfänger betriebsfähig ist, eine Empfängerverarbeitungsfunktion auszuwählen durch Verwenden zumindest einen der ersten und zweiten Schalter (306, 308), um ein Signal, das von jeder der zwei Antennen empfangen wird, an zumindest eine der Vielzahl von Empfängerverarbeitungsfunktionen (312, 314, 326, 330) zu liefern als Reaktion auf zumindest einen des Zweig-Leistungs-Detektors (304) und des Korrelator-Detektors (304); und
wobei der erste Teilsatz der Vielzahl der Empfängerverarbeitungsfunktionen (312, 314) eine Standard-Empfängerverarbeitungsfunktion (312) und eine DARP-1(Downlink Advanced Receiver Performance)-Empfängerverarbeitungsfunktion aufweist und der zweite Teilsatz der Vielzahl der Empfängerverarbeitungsfunktionen (326, 328, 330) eine MSRD(Mobile Station Reception Diversity)-Empfängerverarbeitungsfunktion (326) und zumindest zwei Standard-Empfängerverarbeitungsfunktionen (328, 330) aufweist, die jeweils eine Ausgabe haben, wobei die zumindest zwei Ausgaben durch einen zweiten Signal-Kombinierer (332) kombiniert werden; eine erste Vielzahl von Schaltern (316, 318), wobei jeder Schalter mit einem Ausgang von einem des ersten Teilsatzes der Vielzahl von Empfängerverarbeitungsfunktionen (312, 314) und einer zweiten Vielzahl von Schaltern (334, 336) verbunden ist, wobei jeder Schalter mit einem Ausgang von einem der MSRD-Empfängerverarbeitungsfunktion (326) und dem zweiten Signal-Kombinierer (332) verbunden ist;

wobei jeder Schalter der ersten Vielzahl von Schaltern anspricht auf eine Ausgabe der DARP-1-Empfängerverarbeitungsfunktion;

wobei jeder Schalter der zweiten Vielzahl von Schaltern anspricht auf eine Ausgabe der MSRD-Empfängerverarbeitungsfunktion;

eine erste Vielzahl von Entzerrern, wobei ein jeweiliger Entzerrer (320, 322) mit jedem Schalter (316, 318) der ersten Vielzahl von Schaltern verbunden ist;

eine zweite Vielzahl von Entzerrern, wobei ein jeweiliger Entzerrer (338, 340) mit jedem Schalter (334, 336) der zweiten Vielzahl von Schaltern verbunden ist;

einen ersten Multiplexer (324), der mit der ersten Vielzahl von Entzerrern (320, 322) verbunden ist und anspricht auf zumindest eine Ausgabe der ersten Vielzahl von Entzerrern (320, 322);

einen zweiten Multiplexer (342), der mit der zweiten Vielzahl von Entzerrern (338, 340) verbunden ist und anspricht auf zumindest eine Ausgabe der zweiten Vielzahl von Entzerrern;

einen dritten Multiplexer (344), der mit jedem der ersten und zweiten Multiplexer (324, 342) verbunden ist und anspricht auf eine Ausgabe von zumindest einem des Zweig-Leistungs-Detektors (304) und des Korrelator-Detektors (304);

wobei der Empfänger betriebsfähig ist, eine Empfängerverarbeitungsfunktion auszuwählen durch Verwenden zumindest eines Schalters aus der ersten Vielzahl von Schaltern und der zweiten Vielzahl von Schaltern (316, 318), um eine Auswahl von Ausgaben von zumindest einer der Vielzahl von Empfängerverarbeitungsfunktionen (312, 314, 326, 328, 330) zu steuern als Reaktion auf zumindest eine aus einer Ausgabe der DARP-1-Empfängerverarbeitungsfunktion und einer Ausgabe der MSRD-Empfängerverarbeitungsfunktion.

12. Mobile Vorrichtung, die den Empfänger gemäß einem der Ansprüche 1 bis 11 aufweist.

13. Verfahren, das aufweist:

Empfangen eines jeweiligen Signals auf jeder einer Vielzahl von Antennen; Bestimmen einer Leistung jedes Signals und Vergleichen der Leistung jedes Signals mit der Leistung jedes anderen Signals, um ein Ungleichgewichtsmaß in den Leistungen der Signale zu bestimmen;

Bestimmen einer Korrelation zwischen den Signalen;

Auswählen einer Empfängerverarbeitungsfunktion aus einer Vielzahl von Empfängerverarbeitungsfunktionen, die aufweisen zumindest eine Empfängerverarbeitungsfunktion zur Verarbeitung eines einzelnen Signals und zumindest eine Empfängerverarbeitungsfunktion zur Verarbeitung von zumindest zwei Signalen, unter Berücksichtigung zumindest eines aus:

dem Ungleichgewichtsmaß in den Leistungen der Signale, wenn mit einer ersten Schwelle verglichen, und der Korrelation, wenn mit einer zweiten Schwelle verglichen; und

Erzeugen einer Ausgabe unter Verwendung der ausgewählten Empfängerverarbeitungsfunktion;

wobei ein Auswählen der Empfängerverarbeitungsfunktion aufweist ein Abwählen von Empfängerverarbeitungsfunktionen zur Verarbeitung von zumindest zwei Signalen, wenn das Ungleichgewicht größer ist als ein Ungleichgewicht, das der ersten Schwelle entspricht, und/oder durch Abwählen von Empfängerverarbeitungsfunktionen zur Verarbeitung von zumindest zwei Signalen, wenn die Korrelation über der zweiten Schwelle ist;

wobei, wenn das Ungleichgewicht größer ist als ein Ungleichgewicht, das der ersten Schwelle entspricht, Auswählen eines stärksten Signals der Signale, die auf den zwei Antennen empfangen werden, um ein einzelnes Signal zu erzeugen zur weiteren Verarbeitung durch die zumindest eine Empfängerverarbeitungsfunktion zur Verarbeitung eines einzelnen Signals; und

wobei, wenn die Korrelation über der zweiten Schwelle liegt, Durchführen einer Summierung der Signale, die auf den zwei Antennen empfangen werden, um ein einzelnes Signal zu erzeugen zur weiteren Verarbeitung durch die zumindest eine Empfängerverarbeitungsfunktion zur Verarbeitung eines einzelnen Signals.

**14.** Verfahren gemäß Anspruch 13, wobei ein Empfangen eines jeweiligen Signals auf jeder einer Vielzahl von Antennen aufweist:

Empfangen eines jeweiligen Signals auf jeder von zwei Antennen.

**15.** Verfahren gemäß Anspruch 13 oder Anspruch 14, wobei ein Auswählen der Empfängerverarbeitungsfunktion weiter aufweist:

Auswählen der Empfängerverarbeitungsfunktion durch Abwählen zumindest einer Empfängerverarbeitungsfunktion als eine Funktion eines Modulationstyps.

**16.** Verfahren gemäß einem der Ansprüche 13 bis 15, wobei ein Auswählen der Empfängerverarbeitungsfunktion weiter aufweist:

Ausführen eine der Vielzahl von Empfängerverarbeitungsfunktionen und
Bestimmen eines Verarbeitungsgewinns, der durch die Empfängerverarbeitungsfunktion erreicht wird;
Auswählen der Empfängerverarbeitungsfunktion durch Abwählen einer Empfängerverarbeitungsfunktion der Vielzahl von Empfängerverarbeitungsfunktionen als eine Funktion eines Verarbeitungsgewinns für diese Empfängerverarbeitungsfunktion.

**17.** Verfahren gemäß einem der Ansprüche 13 bis 15, wobei ein Auswählen der Empfängerverarbeitungsfunktion weiter aufweist:

Durchführen einer Empfängerverarbeitung unter Verwendung von zumindest zwei der Empfängerverarbeitungsfunktionen;
Durchführen einer jeweiligen Entzerrung für eine Ausgabe von jeder der zumindest zwei Empfängerverarbeitungsfunktionen, um eine jeweilige entzerrte Ausgabe zu erzeugen; und
Bestimmen einer Qualitätsmetrik für jede entzerrte Ausgabe;
Auswählen der Empfängerverarbeitungsfunktion gemäß den Qualitätsmetriken.

**18.** Verfahren gemäß Anspruch 17, wobei ein bestimmen einer Qualitätsmetrik ein Bestimmen von USDC (Unreliable Soft decision Count) aufweist.

**19.** Verfahren gemäß einem der Ansprüche 13 bis 18, wobei
ein Auswählen der Empfängerverarbeitungsfunktion aus der Vielzahl von Empfängerverarbeitungsfunktionen als eine Funktion einer Korrelation und/oder eines Gewinnungleichgewichts zwischen Antennen und einem oder einer Kombination aus:

a) dem Verarbeitungsgewinn, der aus einer oder mehreren der Empfängerverarbeitungsfunktionen resultiert;
b) der Entzerrungsqualität von entzerrten Ausgaben von zumindest zwei Empfängerverarbeitungsfunktionen.

**20.** Computer-lesbares Medium, das Programmcode speichert, ausführbar durch einen Prozessor einer Computervorrichtung, um die Computervorrichtung zu veranlassen, das Verfahren gemäß einem der Ansprüche 13 bis 19 durchzuführen.

**Revendications**

**1.** Récepteur comprenant :

deux antennes (300, 302) ;
une pluralité de fonctions de traitement de réception (312, 314, 326, 330), comprenant au moins une fonction de traitement de réception destinée à traiter un signal unique et au moins une fonction de traitement de réception destinée à traiter au moins deux signaux ; et

a) un détecteur de puissance de branche (304) en mesure de déterminer une puissance de chaque signal reçu sur chaque antenne et de comparer la puissance de chaque signal avec la puissance de chaque autre signal pour déterminer une ampleur du déséquilibre des puissances entre les signaux ; et/ou

b) un détecteur de corrélation (304) en mesure de déterminer une corrélation entre des signaux reçus sur les deux antennes ;

dans lequel le récepteur est en mesure de sélectionner une fonction de traitement de réception en prenant en compte au moins un des éléments suivants :

le déséquilibre entre les puissances des signaux, comparé à un premier seuil, et la corrélation, comparée à un deuxième seuil ; et

dans lequel le récepteur est en mesure de sélectionner les fonctions de traitement de réception en désélectionnant des fonctions de traitement de réception destinées à traiter au moins deux signaux lorsque le déséquilibre est supérieur à un déséquilibre correspondant au premier seuil et/ou en désélectionnant des fonctions de traitement de réception destinées à traiter au moins deux signaux lorsque la corrélation est supérieure au deuxième seuil ; dans lequel, lorsque le déséquilibre est supérieur à un déséquilibre correspondant au premier seuil, un signal le plus puissant, parmi les signaux reçus sur les deux antennes, est sélectionné pour produire un signal unique à traiter en aval par ladite au moins une fonction de traitement de réception destinée à traiter un signal unique ; et dans lequel, lorsque la corrélation est supérieure au deuxième seuil, une somme des signaux reçus sur les deux antennes est réalisée pour produire un signal unique à traiter en aval par ladite au moins une fonction de traitement de réception destinée à traiter un signal unique.

2. Récepteur selon la revendication 1, dans lequel le récepteur est en outre en mesure de sélectionner la fonction de traitement de réception en désélectionnant au moins une fonction de traitement de réception en fonction du type de modulation.

3. Récepteur selon l'une quelconque des revendications 1 et 2, dans lequel :

le récepteur est en outre en mesure de sélectionner la fonction de traitement de réception en sélectionnant entre des première et deuxième fonctions de traitement de réception, parmi ladite pluralité de fonctions de traitement de réception, en fonction du type de modulation, en sélectionnant la première fonction de traitement de réception (312) lorsque le type de modulation est une modulation octovalente par déplacement de phase, 8-PSK, et en sélectionnant la deuxième fonction de traitement de réception (314) lorsque le type de modulation est la modulation à déplacement de phase minimal avec filtre gaussien, GMSK.

4. Récepteur selon l'une quelconque des revendications 1 à 3, dans lequel :

le récepteur est en outre en mesure de sélectionner la fonction de traitement de réception en désélectionnant une fonction de traitement de réception parmi ladite pluralité de fonctions de traitement de réception, en fonction du gain de traitement pour la fonction de traitement de réception.

5. Récepteur selon la revendication 4, dans lequel :

le récepteur est en outre en mesure de sélectionner la fonction de traitement de réception en désélectionnant une fonction de traitement de réception de ladite pluralité de fonctions de traitement de réception, en fonction du gain de traitement pour la fonction de traitement de réception, en déterminant un gain de traitement pour une fonction parmi une première et une deuxième fonction de traitement de réception parmi ladite pluralité de fonctions de traitement de réception et en désélectionnant la fonction parmi la première et la deuxième fonction de traitement de réception si le gain de traitement déterminé est inférieur à un seuil.

6. Récepteur selon l'une quelconque des revendications 1 à 5, qui est également en mesure de sélectionner la fonction de traitement de réception :

en effectuant le traitement de réception à l'aide d'au moins deux des fonctions de traitement de réception ;
en effectuant une égalisation respective d'une sortie de chacune desdites au moins deux fonctions de traitement de réception afin de produire une sortie égalisée respective ;
déterminer des métriques de qualité pour chacune des sorties égalisées ; et
sélectionner la fonction de traitement de réception en fonction des métriques de qualité.

7. Récepteur selon la revendication 6, dans lequel les métriques de qualité comprennent un total des décisions souples non fiables, USDC pour « *Unreliable Soft Decisions Count* ».

**8.** Récepteur selon l'une quelconque des revendications 1 à 7, dans lequel la pluralité de fonctions de traitement de réception comprend :

une fonction de traitement de réception (312) destinée à traiter un signal 8PSK ou un signal GMSK ;
une fonction de traitement de réception (314) destinée à traiter un signal GMSK en utilisant une annulation d'interférences pour antenne simple ; et
au moins une fonction de traitement de réception (326) destinée à traiter deux signaux GMSK ou deux signaux 8PSK.

**9.** Récepteur selon la revendication 8, dans lequel :

la fonction de traitement de réception destinée à traiter un signal 8PSK ou un signal GMSK comprend une fonction de traitement de réception traditionnelle ;
la fonction de traitement de réception destinée à traiter un signal GMSK en utilisant une annulation d'interférences pour antenne simple comprend une fonction de traitement de réception DARP-I ; et
ladite au moins une fonction de traitement de réception destinée à traiter deux signaux GMSK ou deux signaux 8PSK comprend une fonction de traitement de réception MSRD.

**10.** Récepteur selon la revendication 9, dans lequel ladite au moins une fonction de traitement de réception destinée à traiter deux signaux GMSK ou deux signaux 8PSK comprend en outre deux fonctions de traitement de réception traditionnelles ou plus (328, 330), destinées à traiter les deux signaux GMSK ou les deux signaux 8PSK, et un combinateur (332) destiné à combiner les sorties des deux fonctions de traitement de réception traditionnelles.

**11.** Récepteur selon la revendication 1, dans lequel :

la pluralité de fonctions de traitement de réception comprend des moyens destinés à effectuer une rotation inverse (400, 410, 420), une estimation de canal (402, 416, 426) et un filtrage adapté (404, 414, 424) ;
le récepteur comprenant en outre :

un premier commutateur (306) destiné à fournir des signaux provenant des deux antennes (300, 302) à un premier sous-ensemble de la pluralité de fonctions de traitement de réception (312, 314) et un deuxième commutateur (308) destiné à fournir des signaux provenant des deux antennes (300, 302) à un deuxième sous-ensemble de la pluralité de fonctions de traitement de réception (326, 328, 330), les premier et deuxième commutateurs répondant à au moins un élément parmi le détecteur de puissance de branche (304) et le détecteur de corrélation (304) ;
un trajet de signal partant de chacune des deux antennes et arrivant aux premier et deuxième commutateurs (306, 308) et à au moins un élément parmi le détecteur de puissance de branche (304) et le détecteur de corrélation (304) ;
un premier combinateur de signaux (310) couplé à la sortie du premier commutateur (306) et répondant à un élément parmi le détecteur de puissance de branche (304) et le détecteur de corrélation (304) ;

dans lequel le récepteur est en mesure de sélectionner une fonction de traitement de réception en utilisant au moins l'un des premier et deuxième commutateurs (306, 308) afin de fournir un signal reçu de chacune des deux antennes à au moins une fonction parmi la pluralité de fonctions de traitement de réception (312, 314, 326, 330) en réponse à au moins un élément parmi le détecteur de puissance de branche (304) et le détecteur de corrélation (304) ; et dans lequel le premier sous-ensemble de la pluralité de fonctions de traitement de réception (312, 314) comprend une fonction de traitement de réception traditionnelle (312) et une fonction de traitement de réception DARP-1, pour « *Downlink Advanced Receiver Performance* » - Performances descendantes avancées du récepteur ; et dans lequel le deuxième sous-ensemble de la pluralité de fonctions de traitement de réception (326, 328, 330) comprend une fonction de traitement de réception MSRD (326), pour « *Mobile* Station *Reception Diversity* » - Diversité en réception sur station mobile, et au moins deux fonctions de traitement de réception traditionnelles (328, 330), chacune possédant une sortie, lesdites au moins deux sorties étant combinées par un deuxième combinateur de signaux (332) ;
une première pluralité de commutateurs (316, 318), chaque commutateur étant couplé à une sortie de l'une des fonctions du premier sous-ensemble de la pluralité de fonctions de traitement de réception (312, 314) et une deuxième pluralité de commutateurs (334, 336), chaque commutateur étant couplé à une sortie d'un élément parmi la fonction

**EP 1 953 925 B1**

de traitement de réception MSRD (326) et le deuxième combinateur de signaux (332) ;

chaque commutateur, dans la première pluralité de commutateurs, répondant à une sortie de la fonction de traitement de réception DARP-1;

chaque commutateur, dans la deuxième pluralité de commutateurs, répondant à une sortie de la fonction de traitement de réception MSRD ;

une première pluralité d'égaliseurs, un égaliseur (320, 322) respectif étant couplé à chacun des commutateurs (316, 318) de la première pluralité de commutateurs ;

une deuxième pluralité d'égaliseurs, un égaliseur (338, 340) étant couplé à chacun des commutateurs (334, 336) de la deuxième pluralité de commutateurs ;

un premier multiplexeur (324) étant couplé à la première pluralité d'égaliseurs (320, 322) et répondant à au moins une sortie de la première pluralité d'égaliseurs (320, 322) ;

un deuxième multiplexeur (342) étant couplé à la deuxième pluralité d'égaliseurs (338, 340) et répondant à au moins une sortie de la deuxième pluralité d'égaliseurs ;

un troisième multiplexeur (344) étant couplé à chacun des premier et deuxième multiplexeurs (324, 342) et répondant à une sortie d'un élément parmi le détecteur de puissance de branche (304) et le détecteur de corrélation (304) ;

dans lequel le récepteur est en mesure de sélectionner une fonction de traitement de réception en utilisant au moins un commutateur dans la première pluralité de commutateurs et la deuxième pluralité de commutateurs (316, 318) pour commander la sélection des sorties d'au moins une fonction dans la pluralité de fonctions de traitement de réception (312, 314, 326, 328, 330) en réponse à au moins une sortie soit de la fonction de traitement de réception DARP-1, soit de la fonction de traitement de réception MSRD.

**12.** Dispositif mobile comprenant le récepteur selon l'une quelconque des revendications 1 à 11.

**13.** Procédé comprenant les étapes consistant à :

recevoir un signal respectif sur chaque antenne parmi une pluralité d'antennes ;

déterminer une puissance de chaque signal et comparer la puissance de chaque signal avec la puissance de chaque autre signal afin de déterminer une ampleur du déséquilibre entre les puissances des signaux ;

déterminer une corrélation entre les signaux ;

sélectionner une fonction de traitement de réception, parmi une pluralité de fonctions de traitement de réception comprenant au moins une fonction de traitement de réception destinée à traiter un signal unique et au moins une fonction de traitement de réception destinée à traiter au moins deux signaux, en prenant en compte au moins un des éléments suivants :

le déséquilibre entre les puissances des signaux, comparé à un premier seuil, et la corrélation, comparée à un deuxième seuil ; et

produire une sortie à l'aide de la fonction de traitement de réception sélectionnée ;

dans lequel la sélection de la fonction de traitement de réception comprend l'étape consistant à désélectionner des fonctions de traitement de réception destinées à traiter au moins deux signaux lorsque le déséquilibre est supérieur à un déséquilibre correspondant au premier seuil et/ou à désélectionner des fonctions de traitement de réception destinées à traiter au moins deux signaux lorsque la corrélation est supérieure au deuxième seuil ;

lorsque le déséquilibre est supérieur à un déséquilibre correspondant au premier seuil, sélectionner un signal le plus puissant, parmi les signaux reçus sur les deux antennes, pour produire un signal unique à traiter en aval par ladite au moins une fonction de traitement de réception destinée à traiter un signal unique ; et

lorsque la corrélation est supérieure au deuxième seuil, effectuer une somme des signaux reçus sur les deux antennes pour produire un signal unique à traiter en aval par ladite au moins une fonction de traitement de réception destinée à traiter un signal unique.

**14.** Procédé selon la revendication 13, dans lequel la réception d'un signal respectif sur chaque antenne parmi une pluralité d'antennes comprend l'étape consistant à :

recevoir un signal respectif sur chacune des deux antennes.

**15.** Procédé selon la revendication 13 ou la revendication 14, dans lequel la sélection de la fonction de traitement de réception comprend en outre les étapes consistant à :

sélectionner la fonction de traitement de réception en désélectionnant au moins une fonction de traitement de

**19**

réception en fonction du type de modulation.

**16.** Procédé selon l'une quelconque des revendications 13 à 15, dans lequel la sélection de la fonction de traitement de réception comprend en outre les étapes consistant à :

exécuter une fonction parmi la pluralité de fonctions de traitement de réception et déterminer un gain de traitement atteint par la fonction de traitement de réception ;
sélectionner la fonction de traitement de réception en désélectionnant sur la pluralité de fonctions de traitement de réception une fonction de traitement de réception en fonction du gain de traitement de cette fonction de traitement de réception.

**17.** Procédé selon l'une quelconque des revendications 13 à 15, dans lequel la sélection de la fonction de traitement de réception comprend en outre l'étape consistant à :

effectuer le traitement de réception en utilisant au moins deux des fonctions de traitement de réception ;
effectuer une égalisation respective sur une sortie de chacune desdites au moins deux fonctions de traitement de réception afin de produire une sortie égalisée respective ; et
déterminer des métriques de qualité pour chacune des sorties égalisées; et
sélectionner la fonction de traitement de réception en fonction des métriques de qualité.

**18.** Procédé selon la revendication 17, dans lequel la détermination des métriques de qualité comprend l'étape consistant à déterminer un total des décisions souples non fiables, USDC.

**19.** Procédé selon l'une quelconque des revendications 13 à 18, dans lequel la sélection de la fonction de traitement de réception dans la pluralité de fonctions de traitement de réception s'effectue en fonction de la corrélation et/ou du déséquilibre du gain entre les antennes et de l'un ou l'autre des facteurs suivants, ou encore d'une combinaison de ceux-ci :

a) gain de traitement résultant d'une ou plusieurs des fonctions de traitement de réception ;
b) qualité d'égalisation des sorties égalisées d'au moins deux fonctions de traitement de réception.

**20.** Support lisible par ordinateur, portant du code de programme, pouvant être exécuté par un processeur d'un dispositif informatique afin de commander audit dispositif informatique d'exécuter le procédé selon l'une quelconque des revendications 13 à 19.

**FIG. 1**

EP 1 953 925 B1

```
        ┌─────────────┐                              ┌─────────────┐
  ──────▶│ Derotation  │──────●──────────────────────▶│ Matched Filter│──────▶
        │     400     │       │                      │     404     │
        └─────────────┘       │                      └─────────────┘
                              │       ┌─────────────┐       ▲
                              │       │   Channel   │       │
                              └──────▶│ Estimation  │───────┘
                                      │     402     │
                                      └─────────────┘
```

**FIG. 2**

```
        ┌─────────────┐       ┌─────────────┐       ┌──────────────┐
  ──────▶│ Derotation  │──●───▶│ Space-Time  │═════▶│ Multi-Channel│──────▶
        │     410     │  │    │  2D Filter  │       │Matched Filter│
        └─────────────┘  │    │     412     │       │     414      │
                         │    └─────────────┘       └──────────────┘
                         │           ▲
                         │    ┌──────────────┐
                         │    │ Joint Filter and│
                         └───▶│   Channel      │
                              │  Estimation    │
                              │     416        │
                              └──────────────┘
```

**FIG. 3**

```
        ┌─────────────┐       ┌─────────────┐       ┌──────────────┐
  ═════▶│ Derotation  │───────▶│ Space-Time  │═════▶│ Multi-Channel│──────▶
        │     420     │  │  │ │  2D Filter  │       │Matched Filter│
        └─────────────┘  │  │ │     422     │       │     424      │
                         │  │ └─────────────┘       └──────────────┘
                         │  │        ▲
                         │  │ ┌──────────────┐
                         │  └▶│ Joint Filter and│
                         └───▶│   Channel      │
                              │  Estimation    │
                              │     426        │
                              └──────────────┘
```

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0159945 A
- WO 2005088864 A
- JP 11284554 A
- US 11564953 B
- US 20080133983 A
- US 11420254 B